# EUROPEAN PATENT APPLICATION

(11) **EP 4 831 551 A1**
(43) Date of publication of application: **28.10.2026**
(21) Application number: 24860558.6
(22) Date of filing: 29.02.2024
(51) Int. Cl.: F24S 10/90, F24S 60/30

(54) **SOLAR WATER HEATER**

(30) Priority: 28.08.2023 RU 2023122263
(71) Applicant: Skaldin, Nikolai Nikolaevich, Moscow, 119270 (RU)
(72) Inventor: Skaldin, Nikolai Nikolaevich, Moscow, 119270 (RU)
(74) Representative: Jankovic, Ilija
(86) International application number: PCT/RU2024/050048
(87) International publication number: WO 2025/048675

(57) **Abstract**

Invention relates to the field of devices for heating water, in which solar radiation is used as an energy source. The proposed device for heating water contains a heat storage tank and a heat exchange tube. The heat storage tank is filled with a liquid heat medium and contains a dome-shaped element, the outer surface of which is exposed to solar radiation. The heat exchange tube is located inside the heat storage tank so that the outer surface of the heat exchange tube is in contact with the liquid heat medium, and the inner volume of the heat exchange tube is isolated from the liquid heat medium, while water to be consumed flows in the inner volume of the heat exchange tube. The heat exchange tube is equipped with a valve which is capable of releasing water from the heat exchange tube into the heat storage tank. The technical result of the invention is the possibility of replenishing the losses of the liquid heat medium directly from the heat exchange tube that simplifies the design of the device.

## Description

### Technical Field

The invention relates to the field of devices for heating water, in which solar radiation is used as an energy source.

### State of the Art

The use of solar radiation to heat water for domestic purposes is a very attractive idea due to the availability and inexhaustibility of this resource. Nevertheless, the technical implementation of this idea has difficulties related to changes in the position of the Sun relative to the solar collector during the day, as well as atmospheric phenomena that can impede the passage of sunlight. Both of these factors reduce the amount of solar flux incident on the solar collector, which means they negatively affect the efficiency of water heating.

The patent publication FR2468077A1, 04/30/1981 discloses a device for heating water containing a domed tank filled with water, which is open to solar radiation, and which simultaneously performs the functions of a solar collector and a heat storage. Since the outer surface of the domed tank has the shape of a hemisphere, at any time of the day on the outer surface of the domed tank there is an portion located perpendicular to the sunlight incident on it and perceiving the maximum possible amount of solar flux per its specific area.

The water heated by solar heat is supplied to the consumer directly from the domed tank, and its consumption is compensated by supplying fresh water to the domed tank so that the water level in the domed tank remains constant. Due to the large volume of water trapped in the domed tank, it is able to keep warm for a long time, even during periods of cloudy weather or at night.

However, this known device being an analog of the invention, has serious disadvantages. Prolonged exposure of a large volume of ready-to-use water in a heated state promotes the proliferation of pathogenic microorganisms in this water, as a result of which the area of safe use of this water is naturally reduced. In addition, salt deposits are actively forming on the inner surface of the domed tank in contact with the heated water, which due to their high thermal conductivity, reduce the efficiency of heat transfer from the inner surface of the domed tank to the heated water, i.e. prevent the heating of the water.

These disadvantages were overcome in the device for heating water, disclosed in the patent publication CN203980673U, 03.12.2014 and acting as a prototype of the invention. This known device contains a heat storage tank filled with water, which, together with a solar collector and a pump, is included in a closed circulation circuit. Water circulating in a closed circulation circuit plays the role of a liquid heat medium and receives heat passing through a solar collector.

A coil is placed inside the heat storage tank and completely immersed in a liquid heat medium, and water to be heated for further consumption (hereinafter referred to as "consumed water") flows through this coil. The prototype of the invention has the advantage that the consumed water is supplied directly from the municipal water supply system and is heated during its flow through the coil, so that the consumed water is not subjected to prolonged exposure at elevated temperatures. Furthermore, since the liquid heat medium circulates in a closed circulation circuit and does not mix with the consumed water, the water used in its capacity can be specially desalinated or replaced with another liquid that does not create deposits.

Nevertheless, the prototype of the invention is devoid of those favorable opportunities that are inherent to the analogue described above. To effectively perceive solar radiation, the solar collector of the prototype must be equipped with a tracking system that turns it after the Sun. In addition, the prototype should be equipped with a pump that pumps a liquid heat medium through a closed circulation circuit so that the liquid heat medium passes through a solar collector. However, this tracking system, and with it a pump of the closed circulation circuit, significantly complicate the device and reduce its degree of autonomy.

Another disadvantage of the prototype is that the losses of the liquid heat medium are compensated through a special fitting pipe that connects the heat storage tank to a storage vessel for the liquid heat medium. This configuration requires labour-intensive technological operations related to the execution of an additional hole in the wall of the heat storage tank designed for the fitting pipe, as well as with the installation of the fitting pipe, its sealing, etc.

The technical problem that the invention aimed to solve is the search for a simplified solution that in an autonomous mode and at any time of the day is capable of providing heating of the liquid heat medium that transfers heat to the consumed water.

### Summary of the Invention

To solve this technical problem, a device for heating water (hereinafter also referred to as "solar water heater") containing a heat storage tank and a heat exchange tube is proposed as an invention. The heat storage tank is filled with a liquid heat medium and contains a dome-shaped element, the outer surface of which is exposed to solar radiation. The heat exchange tube is located inside the heat storage tank so that the outer surface of the heat exchange tube is in contact with the liquid heat medium, and the inner volume of the heat exchange tube is isolated from the liquid heat medium, while water to be consumed flows in the inner volume of the heat exchange tube. The heat exchange tube is equipped with a valve (hereinafter referred to as "replenishment valve") which is capable of releasing water from the heat exchange tube into the heat storage tank.

The first technical result of the invention is that a heat storage tank with a liquid heat medium, which provides heating of consumed water passing in isolation from the liquid heat medium, in addition to the function of storing thermal energy also performs the function of a solar collector.

The cause-and-effect link between the features of the invention and the first technical result is that the dome-shaped element of the heat storage tank at any time of the day has a portion of outer surface facing the Sun and capable of receiving maximum solar flux per its specific area.

Due to the first technical result, the invention acquires the following advantages in relation to the prototype:
(a) there is no need to equip a solar water heater with a closed circulation circuit, a solar collector tracking system and a pump of the closed circulation circuit,
(b) there is no need to supply electricity to the specified elements.

Ultimately, these factors simplify the design of the solar water heater and ensure its autonomous operation.

The second technical result of the invention is the possibility of replenishing the losses of the liquid heat medium directly from the heat exchange tube. Compared to the prototype, where a special fitting pipe is used to compensate for the loss of liquid heat medium, which is separately fitted to the heat storage tank and connected to the storage tank for liquid heat medium, the design of the solar water heater is significantly simplified.

The third technical result is to reduce the weight and material consumption of the solar water heater, which is made possible by the absence of a hole in the wall of the heat storage tank for the special fitting pipe used in the prototype and by the resulting increase in the strength of the heat storage tank.

In the first particular embodiment of the invention, the heat exchange tube contains an element made in the form of a flat spiral, and the outer surface of this element is in contact with the liquid heat medium. This design makes it possible to increase the length of the path traversed by the consumed water inside the heat storage tank, or in other words, to increase the heat exchange time between the consumed water and the liquid heat medium, which increases the heating efficiency of the consumed water without significantly complicating the design of the solar water heater.

In the second particular embodiment of the invention, the liquid heat medium is water taken from the same source as the consumed water. This design simplifies the operating conditions of the solar water heater and increases its autonomy.

In the third particular embodiment of the invention, the replenishment valve is equipped with a float (hereinafter referred to as the "control float"), which as it moves downwards along with the level of the liquid heat medium is capable of opening the replenishment valve. This design allows automatic maintaining of the preset level of liquid heat medium in the heat storage tank without using complex sensors that simplifies the design of the solar water heater.

### Brief Description of the Drawings

The embodiment of the invention is explained by references to the figures:
Fig. 1 - appearance view of a solar water heater made according to the invention;
Fig. 2 - view of a solar water heater made according to the invention in a crosssection A-A;
Fig. 3 - three-dimensional view of a solar water heater made according to the invention with the dome-shaped element of the heat storage tank removed.

It should be noted that shape and dimensions of the individual elements shown in the figures can be arbitrary and can be shown in such a way as to most clearly illustrate the relative position of the solar water heater elements, as well as their cause-and-effect link with the technical result.

### Embodiment of the Invention

The embodiment of the invention is shown on the best its variants, which do not impose restrictions on the scope of protected rights.

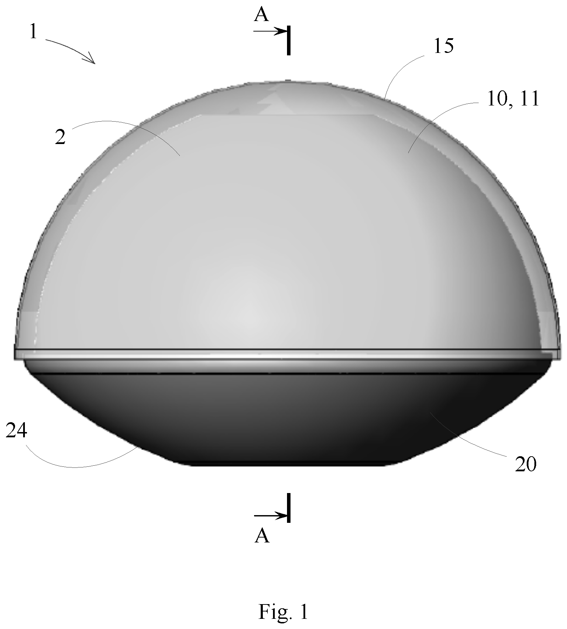

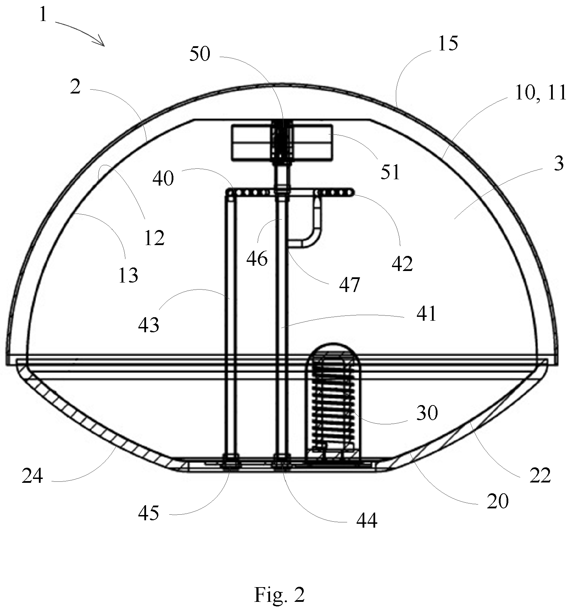

The solar water heater 1 (Fig. 1-3) contains a heat storage tank 2, which is formed by hermetically interconnected upper and lower components 10 and 20 made of stainless steel. The upper component 10 contains a dome-shaped element 11, the outer surface 12 of which preferably has the shape of a hemisphere, and in a less preferred embodiment, the shape of another closed from top and open from bottom rotation surface. In the execution shown in Fig. 1 and 2, the dome-shaped element 11 completely coincides with the upper component 10, which makes it possible to maximize the solar flux incident on the heat storage tank 2. The lower component 20 has the shape of a bowl open from above and being interconnected with the upper component 10 forms together with it an enclosed cavity 3 of the heat storage tank 2.

It should be noted that the upper and lower components 10 and 20 may have another configuration, for example, the dome-shaped element 11 may occupy only part of the upper component 10, and the lower component 20 may have a flat shape. Furthermore, the heat storage tank 2 does not necessarily have to be formed by upper and lower components 10 and 20 interconnected in a horizontal plane, herewith in the context of the invention a fundamentally important feature of the heat storage tank 2 is the presence of a dome-shaped element 11.

The heat storage tank 2 during its operation is positioned so that the outer surface 12 of its dome-shaped element 11 is exposed to solar radiation. Since the outer surface 12 of the dome-shaped element 11 has the shape of a hemisphere, at any time of the day the dome-shaped element 11 has a portion of the outer surface 12 that faces the Sun and is able to receive maximum solar flux per its specific area.

Near the Earth surface, solar radiation contains a significant infrared component that transfers heat, as a result of which the dome-shaped element 11 can be effectively heated by solar heat at any time when the sun rays fall on its outer surface 12. To increase the heating efficiency of the dome-shaped element 11, a coating is applied to the outer surface 12 minimizing reflection and maximizing absorption of sunlight.

A liquid heat medium, preferably water, fills essentially the entire enclosed cavity 3 so that it contacts with the inner surface 13 of the dome-shaped element 11 over the entire or almost entire surface area. Due to the relatively small wall thickness of the dome-shaped element 11, preferably 1-1.5 mm, essentially all the heat absorbed by the outer surface 12 is transferred to the inner surface 13, and from it to the liquid heat medium.

Water has the maximum specific heat capacity among liquids, which is manifested in the high inertia of increasing and decreasing its temperature during the heat transfer process. Accordingly, the use of water as the liquid heat medium seems appropriate from the point of view of maximizing the heat retention time by the liquid heat medium in the absence of an external heat source, i.e. in cloudy weather or at night. In other words, the use of water as the liquid heat medium maximizes the heat storage properties of the heat storage tank 2. It should also be noted that the invention allows the use of other liquids with high heat capacity as the liquid heat medium.

To further increase the efficiency of heat retention in the heat storage tank 2, the dome-shaped element 11 is equipped with a transparent dome 15, which is made of plexiglass and installed with a gap to the outer surface 12. In the preferred embodiment, a vacuum is created in the gap between the transparent dome 15 and the dome-shaped element 11, which prevents heat dissipation from the heat storage tank 2 due to heat transfer and convection. In addition, the plexiglass prevents the passage of long-wavelength infrared radiation emitted by the relatively weakly heated dome-shaped element 11, reflecting it back towards the outer surface 12.

In addition, in order to provide heat retention in the heat storage tank 2, a thermal insulation layer 24 is fixed on the outer surface 22 of the lower component 20, which can be made of any material capable of being used as a thermal insulator.

Further, an electric heater 30 is installed on the lower component 20 being designed to maintain a set temperature of the liquid heat medium in cloudy weather or at night. Since the liquid heat medium has a high heat capacity and is enclosed in a thermally insulated closed cavity 3, it is able to store accumulated heat for a long time. Due to this, the electric heater 30 is used only in addition to the main energy source - solar radiation that, however, significantly increases the convenience of using the solar water heater 1.

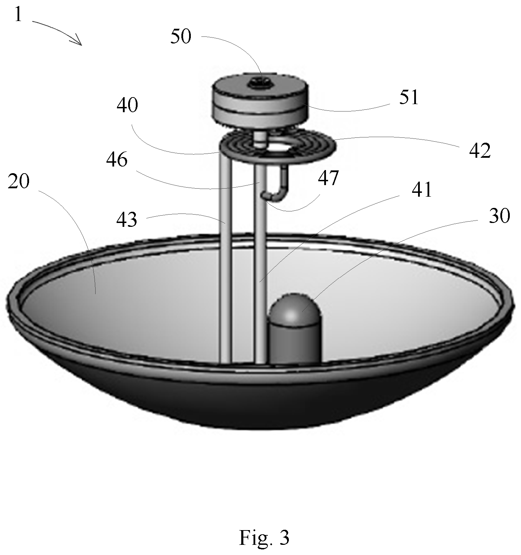

Heat exchange tube 40 is located in the closed cavity 3 and contains a sequentially arranged inlet pipe 41, an active element 42 and an outlet pipe 43, while the outer surface every of which is in contact with a liquid heat medium. Although in the design shown in Fig. 2 and 3, essentially the entire outer surface of the heat exchange tube 40 is in contact with the liquid heat medium, this is not necessary, and the heat exchange tube 40 can only contact the liquid heat medium on a portion of its outer surface, for example, on the outer surface of the active element 42. Thus, the term "the outer surface of the heat exchange tube 40 is in contact with a liquid heat medium" includes the embodiment when only a portion of the outer surface of the heat exchange tube 40 is in contact with a liquid heat medium.

The inlet pipe 41 and the outlet pipe 43 are fixed to the lower component 20 so that the inlet end of the inlet pipe 41 and the outlet end of the outlet pipe 43, which are respectively the inlet and outlet ends 44 and 45 of the heat exchange tube 40, are located outside of the heat storage tank 2. Due to this, the internal volume of the heat exchange tube 40 is insulated from the closed cavity 3 and, accordingly, from the liquid heat medium located in the closed cavity 3.

The inlet end 44 is connected to a source of consumed water (not shown) capable of providing pressure in the internal volume of the heat exchange tube 40, as a result of that the consumed water flows through the internal volume of the heat exchange tube 40 and exits the outlet end 45 connected to a device for supplying water to the consumer (not shown), such as a mixer or flow control. The source of the consumed water can be, for example, a municipal water supply system or a pump that supplies the consumed water from a well with or without pre-filtration.

Being in contact with the liquid heat medium heated by sunlight, the outer surface of the heat exchange tube 40 receives heat from it, which then is transferred through the wall of the heat exchange tube 40 to its inner surface, and then to the consumed water that has contact with this inner surface. Thus, the consumed water flowing in the internal volume of the heat exchange tube 40 is heated by the heat of the liquid heat medium, remaining isolated from it, while after exiting the heat exchange tube 40, the consumed water is immediately supplied to the consumer. Due to this, when using the solar water heater 1 the consumed water is not maintained in a heated state for a long time, that excludes the development of microorganisms in it.

In addition, since water used as the liquid heat medium is not intended for the consumption, additives can be introduced into it that slow down or eliminate the occurrence of thermal barrier deposits and corrosion spots on the inner surface 13 of the dome-shaped element 11. As a result, the amount of heat transfer between the inner surface 13 and the liquid heat medium remains at an initially high level for a long time, that makes it possible to maintain at a high level both the temperature and the heating rate of the liquid heat medium.

Nevertheless, with a low hardness of the consumed water, that is achieved, for example, as a result of filtration of the consumed water on the side of the source of the consumed water, a water from the same source as the consumed water can be used as the liquid heat medium. From the point of view of forming deposits, such water is to an acceptable extent equivalent to the specially prepared water described above, but at the same time this embodiment significantly increases the ease of operation and autonomy of the solar water heater 1.

However, during the operation of the solar water heater 1, the liquid heat medium gradually evaporates, that is why its level in the closed cavity 3 decreases. To replenish the volume of the lost liquid heat medium the heat exchange tube 40 is equipped with a replenishment valve 50, which is capable of releasing the consumed water from the heat exchange tube 40 into a closed cavity 3, but preventing the penetration of the liquid heat medium into the internal volume of the heat exchange tube 40. In addition, as mentioned above, the consumed water dwells in the heat exchange tube 40 under increased pressure, which creates an additional barrier to penetration of the liquid heat medium into the internal volume of the heat exchange tube 40.

In the simplest embodiment, the replenishment valve 50 includes a section of the wall of the heat exchange tube 40, on which a through hole is made, and a gate valve that is capable of opening and closing this through hole. In addition, the replenishment valve 50 is equipped with a control float 51, which is designed to open and close the replenishment valve 50, and which is made as a hollow body capable of being held on the open surface of the liquid heat medium and moving down and up with it.

The control float 51 engages with said gate valve, and when the control float 51 together with the open surface of the liquid heat medium descends to the lower preset level, the gate valve opens. After a volume of water, which ensures that the control float 51 rises along with the open surface of the liquid heat medium to the upper preset level, is released from the heat exchange tube 40 through the said through hole, the control float 51 moves the gate valve to the closed position, and the solar water heater 1 continues to operate normally.

As shown in Fig. 2 and 3, the replenishment valve 50 and the control float 51 are mounted on a dead-end section 46 of the inlet pipe 41 extending vertically upward from the junction 47 of the inlet pipe 41 with the active element 42. However, this design does not create a limitation, the replenishment valve 50 and the control float 51 can be installed on any other vertical section of the heat exchange tube 40.

In addition, the replenishment valve 50 may have a different design, and for example, may be controlled by an electric actuator based on signals from a level sensor, which is characterizes by a different principle of operation from the control float 51. In this embodiment the replenishment valve 50 can be installed on any part of the heat exchange tube 40, not limited to vertical and dead-end sections.

It should be noted that due to the tightness of the heat storage tank 2, losses of the liquid heat medium caused by evaporation, etc., are insignificant. Even if the liquid heat medium is specially prepared water, such as desalinated water, the relatively rare introduction of a small amount of consumed water into the volume of the liquid heat medium cannot significantly affect the composition and properties of the liquid heat medium. If the required properties of the liquid heat medium are provided by introducing appropriate additives into it, then during the evaporation of the liquid phase, the concentration of these additives increases, and the addition of a certain amount of consumed water to the volume of the liquid heat medium only ensures that the concentration of the additives is restored to the target level.

Thus, the use of the replenishment valve 50 and the control float 51 ensures the automatic maintenance of a preset volume of the liquid heat medium in the heat storage tank 2 while maintaining the properties of the liquid heat medium for a long time.

Meanwhile, replenishment of the liquid heat medium by means of the replenishment valve 50 mounted on the heat exchange tube 40 is achieved without supplying the heat storage tank 2 with an additional fitting pipe used in the prototype and complicated the design of the prototype. In addition, the solar water heater 1 is made without including in its structure other elements presumably necessary for the implementation of the prototype, namely, an additional storage vessel for storing the liquid heat medium, an additional pipeline connecting the storage vessel and the fitting pipe, and an additional pump for pumping the liquid heat medium into the additional pipeline.

Further, using the control float 51 to control the replenishment valve 50 allows to determine the optimal moments for starting and stopping the supply of the liquid heat medium to the closed cavity 3 without installing complex liquid level sensors that require power supply, etc. Accordingly, due to using of the replenishment valve 50 and the control float 51 that are mounted on the heat exchange tube 40, the design of the solar water heater 1 is significantly simplified relative to the prototype, and in addition, the convenience of operation of the solar water heater 1 and the degree of autonomy of its operation are increased.

In addition, the absence of an additional hole in the wall of the heat storage tank 2, which in the prototype is designed for an additional fitting pipe, eliminates the occurrence of a stress concentration region in the material of the heat storage tank 2. This circumstance naturally increases the strength of the heat storage tank 2, which means that the wall of the heat storage tank 2 can be made thinner compared to the prototype. As a result, the weight and material consumption of the solar water heater 1 are reduced relative to the prototype.

The active element 42 is made in the form of a flat spiral in which each next turn surrounds the previous one, that makes it possible to increase the length of the path traversed by the consumed water inside the heat storage tank 2, and therefore means increasing of the heat exchange time between the consumed water and the liquid heat medium through the wall of the active element 42. Thus, due to this very simple solution, the heating temperature of the consumed water coming out of the outlet end 45 of the heat exchange tube 40 can be increased.

In addition, there is possible an embodiment when the active element 42 is made in the form of a vertical spiral, in which all turns have the same diameter and are located side by side with each other. In addition, there are possible such embodiments that represent combinations of the variants described above, for example, when several interconnected flat spirals are located on top of each other.

It should be noted that the temperature of the consumed water coming out of the outlet end 45 of the heat exchange tube 40 and then entering the water supply device to the consumer depends on the temperature of the liquid heat medium and can sometimes be very high. To reduce the temperature of the consumed water to a comfortable value, the water supply device to the consumer can be a mixer mixing heated consumed water coming from the outlet end 45 with cold consumed water coming directly from the source of consumed water.

## Claims

1. A device for heating water which contains a heat storage tank and a heat exchange tube at that
the heat storage tank is filled with a liquid heat medium and contains a dome-shaped element, the outer surface of which is exposed to solar radiation at that
the heat exchange tube is located inside the heat storage tank so that the outer surface of the heat exchange tube is in contact with the liquid heat medium, and the inner volume of the heat exchange tube is isolated from the liquid heat medium, while water to be consumed flows in the inner volume of the heat exchange tube, at that
the heat exchange tube is equipped with a valve which is capable of releasing water from the heat exchange tube into the heat storage tank.

2. The device of claim 1, in which the heat exchange tube contains an element made in the form of a flat spiral, and the outer surface of this element is in contact with the liquid heat medium.

3. The device of claim 1, in which the liquid heat medium is water taken from the same source as the consumed water.

4. The device of claim 1, in which the valve is equipped with a float which as it moves downwards along with the level of the liquid heat medium is capable of opening the valve.
